# EUROPEAN PATENT APPLICATION

(11) **EP 4 468 592 A1**
(43) Date of publication of application: **27.11.2024**
(21) Application number: 23174960.7
(22) Date of filing: 23.05.2023
(51) Int. Cl.: H02P 29/00, H02P 29/40

(54) **METHOD FOR MONITORING THE STATE OF HEALTH OF A POWERTRAIN OF AN ELECTRIC VEHICLE AND ELECTRIC VEHICLE IMPLEMENTING SAID METHOD**

(71) Applicant: Volvo Truck Corporation, 405 08 Göteborg (SE)
(72) Inventor: BROLLES, Vincent, 69720 SAINT LAURENT DE MURE (FR); BARILLOT, Thomas, 69440 MORNANT (FR)
(74) Representative: Lavoix

(57) **Abstract**

This method (100) for monitoring the state of health of a powertrain of an electric vehicle, wherein the powertrain comprises an electric motor and a drivetrain, wherein the drivetrain delivering the motor torque to mechanical components (12) of the electric vehicle, comprises an analysis cycle (120) that includes, in this order:
- running (121) the electric motor in a first direction of rotation until a first preset speed of the electric motor is reached;
- maintaining (122) the first preset speed until stabilization of the powertrain;
- measuring (123) a first motor torque delivered by the electric motor to the drivetrain; and
- establishing (127) a state of health of the powertrain by analyzing said first motor torque.

The method further comprises comparing (130) the state of health established (127) during the analysis cycle (120A; 120B) of the powertrain to a reference value to detect wear of the powertrain.

## Description

### TECHNICAL FIELD

The disclosure relates generally to electric vehicles. In particular aspects, the disclosure relates to a method for monitoring the wear of a powertrain of an electric vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Electric vehicles using electric motor for propulsion are generally more reliable than vehicles using an internal combustion engine for propulsion, due to a simpler powertrain design. However, heavy electric vehicles, such as trucks, buses and construction equipment, are usually equipped with a more complex powertrain than light vehicle, such as car, and can for example be equipped with a multi-speed transmission.

To ensure vehicle reliability and avoid costly breakdowns, it is important to monitor powertrain wear. This monitoring can be achieved by physical inspection of the vehicle, which is costly and often inefficient for detecting mechanical wear of internal parts of the powertrain, such as bearings in the transmission. Therefore, there is a need for an easily implemented method to monitor the wear of the powertrain of an electric vehicle.

### SUMMARY

According to a first aspect of the disclosure, the disclosure relates to a method for monitoring the state of health of a powertrain of an electric vehicle, the powertrain comprising at least one electric motor and a drivetrain, the drivetrain being configured to deliver a motor torque produced by the electric motor to mechanical components of the electric vehicle to drive the mechanical components.

The method comprises an analysis cycle that includes, in this order:
- running the electric motor in a first direction of rotation until a first preset speed of the electric motor is reached;
- maintaining the first preset speed until stabilization of the powertrain;
- measuring a first motor torque delivered by the electric motor to the drivetrain; and
- establishing a state of health of the powertrain by analyzing said first motor torque.

The method further comprises:
- comparing the state of health established during the analysis cycle of the powertrain to a reference value to detect wear of the powertrain.
The first aspect of the disclosure may seek to monitor the state of health of the powertrain of the vehicle. A technical benefit may include detecting a wear or a defect of the powertrain and improving the maintenance and the durability of the vehicle.

In some examples, including in at least one preferred example, optionally the analysis cycle further includes, in this order: running the electric motor in a second direction of rotation until a second preset speed of the electric motor is reached; maintaining the second preset speed until stabilization of the powertrain; and measuring a second motor torque delivered by the electric motor to the drivetrain. Furthermore, establishing the state of health of the powertrain is performed by analyzing said first motor torque and said second motor torque. A technical benefit may include obtaining a more precise state of health.

In some examples, including in at least one preferred example, optionally establishing the state of health of the powertrain is performed by analyzing an average of the first motor torque and the second motor torque. A technical benefit may include calculating easily the state of health.

In some examples, including in at least one preferred example, the method further comprises an initial cycle, performed before the analysis cycle, wherein the initial cycle includes, in this order: running the electric motor in the first direction of rotation until the first preset speed of the electric motor is reached; maintaining the first preset speed until stabilization of the powertrain; measuring a first initial motor torque delivered by the electric motor to the drivetrain; and establishing an initial state of health of the powertrain by analyzing said first initial motor torque. Furthermore, the reference value against which the state of heath of the powertrain established during the analysis cycle is compared is the initial state of health of the powertrain established during the initial cycle. A technical benefit may include obtaining a reference value allowing to better monitor the apparition of a wear or defect of the powertrain.

In some examples, including in at least one preferred example, the initial cycle further includes, in this order: running the electric motor in the second direction of rotation until the second preset speed of the electric motor is reached; maintaining the second preset speed until stabilization of the powertrain; and measuring a second initial motor torque delivered by the electric motor to the drivetrain. Furthermore, establishing the initial state of health of the powertrain during the initial cycle is performed by analyzing said first initial motor torque and said second initial motor torque. A technical benefit may include obtaining a more precise reference value.

In some examples, including in at least one preferred example, the method further comprises repeating the analysis cycle over time to monitor an evolution over time of the states of health of the powertrain established during the repeated analysis cycles. A technical benefit may include better detecting the apparition of a wear or defect of the powertrain during the life of the vehicle.

In some examples, including in at least one preferred example, the drivetrain is operable between a coupled configuration, in which the drivetrain delivers a motor torque produced by the electric motor to the mechanical components of the electric vehicle, and an uncoupled configuration, in which the electric motor is disconnected from the mechanical components. Furthermore, the method is performed when the drivetrain is in the uncoupled configuration. A technical benefit may include obtaining a more precise measure of the motor torque, the measurement conditions being better controlled.

In some examples, including in at least one preferred example, the analysis cycle is performed after a driver of the electric vehicle requests the electric vehicle to start, and before the vehicle actually starts, and/or after a driver of the electric vehicle requests the electric vehicle to stop, and before the vehicle actually stops. A technical benefit may include performing the method without affecting the operation of the vehicle and with no intervention of the driver.

In some examples, including in at least one preferred example, the electric vehicle is a rechargeable battery electric vehicle, the electric motor being powered by a battery, and wherein the analysis cycle is performed during a recharge of the battery. A technical benefit may include performing the method without affecting the operation of the vehicle and with no intervention of the driver.

In some examples, including in at least one preferred example, the drivetrain comprises a gearbox including gears and at least two dog clutches that can be engaged or disengaged with the gears, the uncoupled configuration of the drivetrain being achieved when at least one dog clutch of the gearbox is not engaged. A technical benefit may include monitoring the state of health of the powertrain of a vehicle having a gearbox.

In some examples, including in at least one preferred example, the method comprises an analysis phase, during which the analysis cycle is repeated for several distinct uncoupled configurations of the drivetrain, each uncoupled configuration of the drivetrain having a different configuration of engaged and disengaged dog clutches. A technical benefit may include obtaining a more precise state of health of the powertrain.

In some examples, including in at least one preferred example, the method further comprises analyzing the states of health of the powertrain established during the analysis cycles of the analysis phase to locate a defect of the powertrain. A technical benefit may include locating a defect or wear of the powertrain, to facilitate the maintenance of the vehicle.

In some examples, including in at least one preferred example, the method is performed when the mechanical components of the electric vehicle are running. A technical benefit may include obtaining a state of health representative of the health of more components of the powertrain.

In some examples, including in at least one preferred example, the mechanical components of the electric vehicle include drive wheels of the electric vehicle. A technical benefit may include monitoring the health of the components driving the drive wheels of the electric vehicle, thus ensuring the vehicle is operated safely.

According to a second aspect of the disclosure, the disclosure relates to a vehicle comprising mechanical components, a powertrain including at least one electric motor and a drivetrain, the drivetrain being configured to deliver a motor torque produced by the electric motor to the mechanical components to drive the mechanical components, a sensor, configured to measure a motor torque delivered by the electric motor to the drivetrain, and a control unit. The control unit is configured to perform the method described here above. The second aspect of the disclosure may seek to facilitate the maintenance of the vehicle thanks to an easy detection of a wear or defect of the powertrain.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary diagram showing a vehicle according to the invention.
**FIG. 2** is an exemplary flowchart of a method according to an example for operating the vehicle of Figure 1.

### DETAILED DESCRIPTION

The detailed description set forth below provides information and examples of the disclosed technology with sufficient detail to enable those skilled in the art to practice the disclosure.

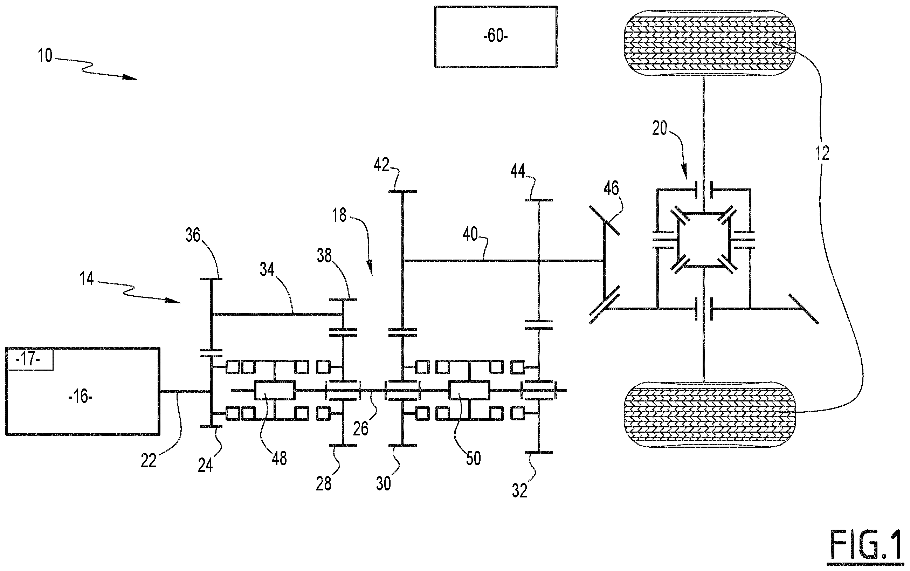

A vehicle 10 according to an example is shown in the exemplary diagram of Figure 1. The vehicle 10 is for example a heavy-duty vehicle, preferably a truck, a bus or a construction equipment.

The vehicle 10 comprises two drive wheels 12 and a powertrain 14. In other examples, the vehicle 10 may comprises more than two drive wheels.

The powertrain 14 comprises an electric motor 16, a drivetrain 18 and a differential 20. The electric motor 16 comprises a motor shaft 22 on which is mounted a motor gear 24, the motor gear being integral with the motor shaft. The electric motor 16 propels the drive wheels 12 through the drivetrain 18 and the differential 20, that is, the electric motor 16 delivers a motor torque to the drivetrain 18, which is then delivered to the differential 20 and the drive wheels 12.

The vehicle 10 comprises a sensor 17, which is configured to measure a motor torque delivered by the electric motor 16 to the drivetrain 18. In the example, the sensor 17 is integrated into the electric motor 16.

The drivetrain 18 comprises a transmission, which is, in the example, a four-speed gearbox. The gearbox comprises a main shaft 26, on which a first main gear 28, a second main gear 30 and a third main gear 32 are mounted to rotate freely about the main shaft. The gearbox also comprises a counter shaft 34, on which are mounted a first counter gear 36, meshing with the motor gear 24, and a second counter gear 38, meshing with the first main gear 28. The first and second counter gears are integral, that is, fixed, with the counter shaft. The gearbox also comprises an output shaft 40, on which are mounted a first output gear 42, meshing with the second main gear 30, a second output gear 44, meshing with the third main gear 32, and a third output gear 46, meshing with a crown gear of the differential 20. The third output gear 46 is also called a pinion gear. The first, second and third output gears are integral, that is, fixed, with the output shaft.

The gearbox also comprises a first dog clutch 48 and a second dog clutch 50. The first dog clutch 48 can be engaged with the motor gear 24 or with the first main gear 28, to couple the motor gear 24 or the first main gear 28 with the main shaft 26. When the first dog clutch 48 is engaged with the motor gear 24 or with the first main gear 28, a motor torque delivered by the electric motor 16 to the motor shaft 22 is transmitted to the main shaft 26. The second dog clutch 50 can be engaged with the second main gear 30 or with the third main gear 32, to couple the second main gear 30 or the third main gear 32 with the main shaft 26. When the second dog clutch 50 is engaged with the second main gear 30 or with the third main gear 32, and when the first dog clutch 48 is engaged with the motor gear 24 or with the first main gear 28, a motor torque delivered by the electric motor 16 to the motor shaft 22 is transmitted to the main shaft 26, then to the output shaft 40 and then to the differential 20 and the drive wheels 12. Hence, in these configurations, the drivetrain delivers a motor torque produced by the electric motor 16 to the drive wheels 12, and the drivetrain is said to be in a coupled configuration. It is to be understood that the drivetrain of the example offers four coupled configurations, and therefore the gearbox comprises four speeds, depending of the gears with which the dog clutches 48 and 50 are engaged.

When the first dog clutch 48 is disengaged from the motor gear 24 and from the first main gear 28, and/or when the second dog clutch 50 is disengaged from the second main gear 30 and from the third main gear 32, the electric motor 16 is disconnected from the output shaft 40, the differential 20 and the drive wheels 12, and the drivetrain 18 is said to be in an uncoupled configuration. In the example, the drivetrain has three uncoupled configuration. In a first uncoupled configuration (also known as "full neutral": clutches 48 and 50 disengaged), the first dog clutch 48 and the second clutch 50 are disengaged from the corresponding gears, and the main shaft 26 is not driven by the motor shaft 22. In a second uncoupled configuration (only clutch 50 is engaged), the first dog clutch 48 is disengaged from the motor gear 24 and from the first main gear 28 and the second dog clutch 50 is engaged with the second main gear 30 or with the third main gear 32, and the main shaft 26 is not driven by the motor shaft 22, as in the first uncoupled configuration. In a third uncoupled configuration (only clutch 48 is engaged), the first dog clutch 48 is engaged with the motor gear 24 or with the first main gear 28 and the second dog clutch 50 is disengaged from the second main gear 30 and from the third main gear 32, and the main shaft 26 is therefore driven by the motor shaft 22 but the output shaft 40 is not driven by the main shaft 26.

In the example, the first, second and third main gears 28, 30 and 32 are mounted onto the main shaft 26 through bearing, shown but not referenced in Figure 1. Furthermore, in the example, the motor shaft 22, the main shaft 26, the counter shaft 34 and the output shaft 40 are mounted onto a housing of the vehicle 10 through bearings, not shown in Figure 1, so as to freely rotate relative to the housing with minimal friction. Said housing of the vehicle 10 is mounted onto a chassis of the vehicle.

In the example, the electric motor 16 is powered by a rechargeable battery, not shown in the diagram of Figure 1. As a variant, the electric motor is powered by other means, such as a fuel cell.

The vehicle 10 also comprises a control unit 60.

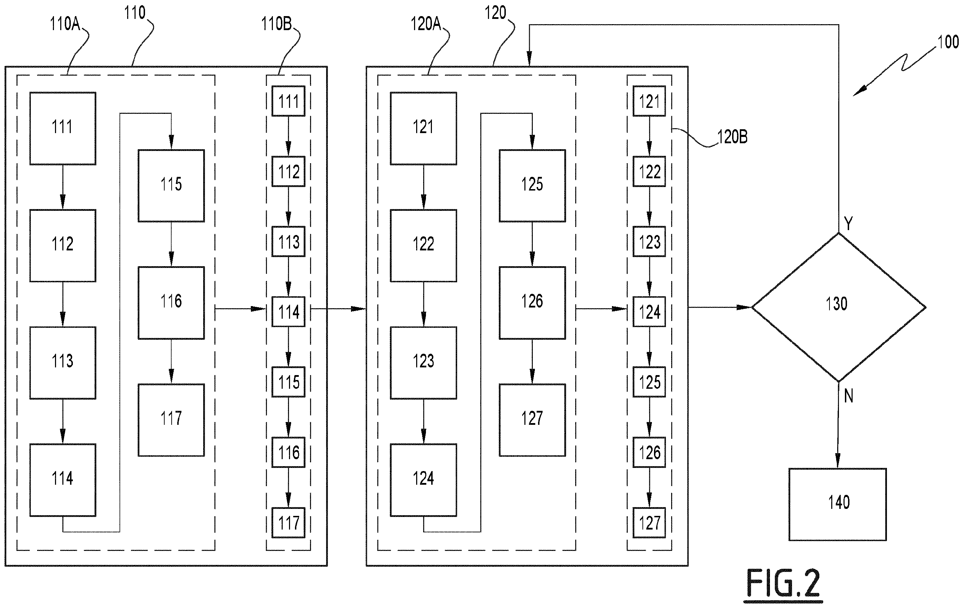

A method 100 for monitoring the state of health of the powertrain 14 of the vehicle 10 is now described, with reference to Figure 2.

Preferably, the method 100 is performed by the control unit 60.

The method 100 starts with an initial phase 110.

Preferably, the initial phase 110 is performed after the vehicle 10 has been manufactured but before it is put into service. Alternatively, the initial phase 110 is performed after the vehicle 10 is put into service and after a running-in, or break-in, period.

The initial phase 110 is performed when the vehicle 10 is not moving and when the drivetrain 18 is in an uncoupled configuration, that is, when the electric motor 16 is disconnected from the drive wheels 12. Preferably, brakes of the vehicle 10 are engaged when the initial cycle 110A is performed.

According to an example, the initial phase 110 is performed during a recharge of the battery of the vehicle 10.

According to another example, the initial phase 110 is performed after a driver of the electric vehicle 10 requests the electric vehicle to start, and before the vehicle actually starts, or is performed after a driver of the electric vehicle requests the electric vehicle to stop, and before the vehicle actually stops.

The initial phase 110 starts with an initial cycle 110A. The initial cycle 110A comprises a first running step 111, during which the electric motor 16 is started and accelerated in a first direction of rotation until a first preset speed, i.e. a first preset rotational speed, of the electric motor is reached. The first preset speed is, for example, comprised between 1000 rpm (revolutions per minute) and 10000 rpm, for example equal to 5000 rpm.

The initial cycle 110A then comprises a first stabilization step 112, during which the first preset speed of the electric motor is maintained until stabilization of the powertrain 14. Preferably, the powertrain 14 is considered to be stabilized when no acceleration of moving parts of the drivetrain is detected. The duration of the first stabilization step 112 is preferably comprised between 1 second and 10 second.

The initial cycle 110A then comprises a first measuring step 113, during which the torque delivered by the electric motor 16 is measured, and designated as a first initial motor torque. Since the drive wheels 12 are disconnected from the electric motor 16 and the speed of the electric motor is stable, the first initial motor torque corresponds to the resistive torque generated by the friction of the components of the drivetrain 18 connected to the electric motor and by the friction of the components of the electric motor. Once the first initial motor torque is measured, the electric motor 16 is stopped. The first initial motor torque is, for example, obtained by measuring the electrical energy consumption of the electric motor 16 during the first stabilization step 112, said consumption being proportional to the torque delivered by the electric motor.

The initial cycle 110A then comprises a second running step 114, during which the electric motor 16 is started and accelerated in a second direction of rotation until a second preset speed, i.e. a second preset rotational speed, of the electric motor is reached. In other words, during the second running step 114, the electric motor 16 is running in opposite direction than during the first running step 111. Preferably, the absolute value of the second preset speed is equal to the absolute value of the first preset speed.

The initial cycle 110A then comprises a second stabilization step 115, during which the second preset speed of the electric motor is maintained until stabilization of the powertrain 14. The duration of the second stabilization step 115 is preferably equal to the duration of the first stabilization step 112.

The initial cycle 110A then comprises a second measuring step 116, during which the torque delivered by the electric motor 16 is measured, and designated as a second initial motor torque. Since the drive wheels 12 are disconnected from the electric motor 16 and the speed of the electric motor is stable, the second initial motor torque corresponds to the resistive torque generated by the friction of the components of the drivetrain 18 connected to the electric motor and by the friction of the components of the electric motor. Once the second initial motor torque is measured, the electric motor 16 is stopped. The second initial motor torque is, for example, obtained by measuring the electrical energy consumption of the electric motor 16 during the second stabilization step 115, said consumption being proportional to the torque delivered by the electric motor.

The initial cycle 110A then comprises an analyzing step 117, during which an initial state of health of the powertrain 14 is established, by analyzing the first initial motor torque and the second initial motor torque. The initial state of health of the powertrain 14 is, for example, defined as the average of the first initial motor torque and the second initial motor torque, or as a function of said average. Other ways to establish the state of health of the powertrain can be considered, for example through the use of a mathematical function in which the first initial motor torque and the second initial motor torque are inputs.

The initial state of health obtained at the end of the initial cycle 110A can then be used as a reference value of the health of the powertrain 14 in the uncoupled configuration of the drivetrain 18 with which the initial cycle was performed. Practically speaking, the initial state of health thus obtained is representative of the health of the components of the electric motor 16 and of all components of the drivetrain 18 that are connected to the electric motor.

For example, if the initial cycle 110A is performed with the drivetrain 18 in the first or in the second uncoupled configuration, the initial state of health thus obtained is representative of the health of the electric motor 16, that is of the motor shaft 22 and of the motor gear 24, and is representative of the health of the counter shaft 34, of the first counter gear 36, of the second counter gear 38, and of the first main gear 28, but also of the health of the bearing with which the first main gear 28 is mounted on the main shaft 26 and of the bearings with which the motor shaft 22 and the counter shaft 34 are mounted onto the housing of the vehicle 10.

If the initial cycle 110A is performed with the drivetrain 18 in the third uncoupled configuration, the initial state of health thus obtained is also representative of the health of the main shaft 26, but also of the health of the bearings with which the second and third main gears 30, 32 are mounted on the main shaft 26 and of the bearings with which the main shaft 26 is mounted onto the housing of the vehicle 10.

In the example, the initial phase 110 comprises a second initial cycle, noted 110B, which comprises the same steps 111 to 117 than the initial cycle 110A. Therefore, the second initial cycle 110B allows establishing a second initial state of health. In other words, the method 100 comprises two initial cycles.

The second initial cycle 110B differs from the initial cycle 110A only in that the drivetrain 18 is not in the same uncoupled configuration during the second initial cycle 110B than during the initial cycle 110A: for example, during the initial cycle 110A, the drivetrain 18 is in the first or second uncoupled configuration, and during the second initial cycle 110B, the drivetrain is in the third uncoupled configuration.

Hence, the initial phase 110 comprises the initial cycle 110A and the second initial cycle 110B, allowing to establish multiple initial states of health of the powertrain 14, in the example two initial states of health, each initial state of health being representative of the health of different components of the powertrain.

It is to be noted that performing the initial cycle 110A or the second initial cycle 110B with the drivetrain 18 in the first uncoupled configuration is strictly identical to performing the same initial cycle with the drivetrain 18 in the second uncoupled configuration, as the exact same components of the drivetrain are connected to the electric motor 16 in both configurations. Hence, in the example, the first and the second uncoupled configuration are undistinguishable while performing the method 100.

After performing the initial phase 110, the method 100 comprises an analysis phase 120.

The analysis phase 120 is performed when the vehicle 10 is not moving and when the drivetrain 18 is in an uncoupled configuration, that is, when the electric motor 16 is disconnected from the drive wheels 12. Preferably, brakes of the vehicle 10 are engaged when the analysis phase 120 is performed.

According to an example, the analysis phase 120 is performed during a recharge of the battery of the vehicle 10.

According to another example, the analysis phase 120 is performed after a driver of the electric vehicle 10 requests the electric vehicle to start, and before the vehicle actually starts, or is performed after a driver of the electric vehicle requests the electric vehicle to stop, and before the vehicle actually stops.

The analysis phase 120 is performed during the life of the vehicle 10, when it is desired to check the state of health, or the wear, of the powertrain 14.

The analysis phase 120 starts with an analysis cycle 120A. The analysis cycle 120A comprises a first running step 121, during which the electric motor 16 is started and accelerated in a first direction of rotation until a first preset speed, i.e. a first preset rotational speed, of the electric motor is reached. The first preset speed is, for example, comprised between 1000 rpm (revolutions per minute) and 10000 rpm, for example equal to 5000 rpm.

The analysis cycle 120A then comprises a first stabilization step 122, during which the first preset speed of the electric motor is maintained until stabilization of the powertrain 14. Preferably, the powertrain 14 is considered to be stabilized when no acceleration of moving parts of the drivetrain is detected. The duration of the first stabilization step 122 is preferably comprised between 1 second and 10 second.

The analysis cycle 120A then comprises a first measuring step 123, during which the torque delivered by the electric motor 16 is measured, and designated as a first motor torque. Since the drive wheels 12 are disconnected from the electric motor 16 and the speed of the electric motor is stable, the first motor torque corresponds to the resistive torque generated by the friction of the components of the drivetrain 18 connected to the electric motor and by the friction of the components of the electric motor. Once the first motor torque is measured, the electric motor 16 is stopped. The first motor torque is, for example, obtained by measuring the electrical energy consumption of the electric motor 16 during the first stabilization step 122, said consumption being proportional to the torque delivered by the electric motor.

The analysis cycle 120A then comprises a second running step 124, during which the electric motor 16 is started and accelerated in a second direction of rotation until a second preset speed, i.e. a second preset rotational speed, of the electric motor is reached. In other words, during the second running step 124, the electric motor 16 is running in opposite direction than during the first running step 121. Preferably, the absolute value of the second preset speed is equal to the absolute value of the first preset speed.

The analysis cycle 120A then comprises a second stabilization step 125, during which the second preset speed of the electric motor is maintained until stabilization of the powertrain 14. The duration of the second stabilization step 125 is preferably equal to the duration of the first stabilization step 122.

The analysis cycle 120A then comprises a second measuring step 126, during which the torque delivered by the electric motor 16 is measured, and designated as a second motor torque. Since the drive wheels 12 are disconnected from the electric motor 16 and the speed of the electric motor is stable, the second motor torque corresponds to the resistive torque generated by the friction of the components of the drivetrain 18 connected to the electric motor and by the friction of the components of the electric motor. Once the second motor torque is measured, the electric motor 16 is stopped. The second motor torque is, for example, obtained by measuring the electrical energy consumption of the electric motor 16 during the second stabilization step 125, said consumption being proportional to the torque delivered by the electric motor.

The analysis cycle 120A then comprises an analyzing step 127, during which a state of health of the powertrain 14 is established, by analyzing the first motor torque and the second motor torque. The state of health of the powertrain 14 is, for example, defined as the average of the first motor torque and the second motor torque, or as a function of said average. Other ways to establish the state of health of the powertrain can be considered, for example through the use of a mathematical function in which the first initial motor torque and the second initial motor torque are inputs.

In the example, the analysis phase 120 comprises a second analysis cycle, noted 120B, which comprises the same steps 121 to 127 than the analysis cycle 120A. Therefore, the second analysis cycle 120B allows establishing a second state of health. In other words, the method 100 comprises two analysis cycles.

The second analysis cycle 120B differs from the analysis cycle 120A only in that the drivetrain 18 is not in the same uncoupled configuration during the second analysis cycle 120B than during the analysis cycle 120A: for example, during the analysis cycle 120A, the drivetrain 18 is in the first or second uncoupled configuration, and during the second analysis cycle 120B, the drivetrain is in the third uncoupled configuration.

Hence, the analysis phase 120 comprises the analysis cycle 120A and the second analysis cycle 120B, allowing to establish multiple states of health of the powertrain 14, in the example two states of health, each state of health being representative of the health of different components of the powertrain.

It is to be noted that performing the analysis cycle 120A or the second analysis cycle 120B with the drivetrain 18 in the first uncoupled configuration is strictly identical to performing the same analysis cycle with the drivetrain 18 in the second uncoupled configuration, as the exact same components of the drivetrain are connected to the electric motor 16 in both configurations. Hence, in the example, the first and the second uncoupled configuration are undistinguishable while performing the method 100.

After performing the analysis phase 120, the method 100 comprises a comparison step 130.

During the comparison step 130, the states of health obtained at the end of the two analysis cycles 120A and 120B of the analysis phase 120 are compared to the corresponding reference values, that is the corresponding initial states of health, obtained during the two initial cycles 110A and 110B of the initial phase 110, to monitor the evolution of the health of the powertrain 14.

Practically speaking, the state of health obtained at the end of the analysis cycle 120A, performed with the drivetrain 18 in the first or second uncoupled configuration, is compared to the initial state of health obtained at the end of the initial cycle 110A, performed with the drivetrain in the same uncoupled configuration, and the state of health obtained at the end of the second analysis cycle 120B, performed with the drivetrain 18 in the third uncoupled configuration, is compared to the initial state of health obtained at the end of the second initial cycle 110B, performed with the drivetrain in the same uncoupled configuration.

The comparison of the states of health obtained at the end of the two analysis cycles 120A, 120B of the analysis phase 120, with the initial states of health obtained at the end of the two initial cycles 110A, 110B of the initial phase 110, allows to detect an evolution in the states of health of the powertrain 14, which corresponds to an evolution in the resistive torque generated by the friction of the components of the drivetrain 18 connected to the electric motor and by the friction of the components of the electric motor. In addition, the evolution of said resistive torque is representative of a degradation, or wear, of the components of the drivetrain 18 connected to the electric motor 16 and of the components of the electric motor. Hence, based on the evolution of the states of health, it is possible to detect wear and degradation of said components.

Essentially, the evolution of the states of health can show an increase of the states of health, a decrease of the states of health, or a stagnation of the states of health, the former two being signs of wear or deterioration of the powertrain and the latter being a sign of good health of the powertrain.

For example, an increase in the states of health, corresponding to an increase in the friction of said components, can be sign of:
- a too high oil level on the drivetrain 18;
- a bearing damage or wear;
- a bearing seizure;
- a bending shaft; or
- a bending gear shifting fork and rods.

For example, an decrease in the states of health, corresponding to an decrease in the friction of said components, can be sign of:
- a too low oil level on the drivetrain 18, for example due to a leak; or
- if a gear or shaft is mounted on a tapered roller bearing, a loss of a bearing pre-load.

Hence, various defects and wear cause of the powertrain 14 can be detected during the comparison step 130.

After the comparison step 130, if a significant evolution of the states of health is detected, that is, if a defect is detected, the method 100 ends with an alert step 140, during which an alert is emitted to the attention of a driver or a controller of the vehicle 10, informing of the existence of a defect in the powertrain 14 and alerting that maintenance should be performed on the powertrain.

On the contrary, if the states of health are detected as relatively stable, the method 100 continues. In the example, after a waiting period, the method 100 repeats an analysis phase 120, with an analysis cycle 120A, 120B for each uncoupled configuration, and then a comparison step 130, as described above. The waiting period is, for example, defined as a number of days, or weeks, before the analysis phase 120 is repeated. Alternatively, the waiting period is defined as a distance to be travelled by the vehicle 10 before the analysis phase 120 is repeated. Alternatively, the analysis could be done after each driving cycle (meaning at each vehicle stopped after driver key-off).

Hence, the method 100 continues to monitor the evolution over time of the states of health of the powertrain 14 during the use of the vehicle 10, until a defect or significant wear is detected.

During the comparison step 130, if a defect of the powertrain 14 is detected, the states of health of the two analysis cycles 120A, 120B of the last analysis phase 120 performed are analyzed to locate the defect. Indeed, if the defect is detected during the analysis cycle 120B, for which the drivetrain 18 is in the third uncoupled configuration, but not during the analysis cycle 120A, for which the drivetrain is in the first or second uncoupled configuration, then in can be deduced that the defect is located in a component which is not connected to the electric motor 16 in the first or second uncoupled configuration, such as the main shaft 26, the bearings with which the second and third main gears 30, 32 are mounted on the main shaft 26 and the bearings with which the main shaft 26 is mounted onto the housing of the vehicle 10.

On the contrary, if the defect of the powertrain 14 is detected regardless of the uncoupled configuration of the drivetrain 18, then it can be deduced that the defect is located in a component which is connected to the electric motor 16 in all uncoupled configuration, such as the motor shaft 22, the motor gear 24, the counter shaft 34, the first counter gear 36, the second counter gear 38, the first main gear 28, the bearing with which the first main gear 28 is mounted on the main shaft 26 and/or the bearings with which the motor shaft 22 and the counter shaft 34 are mounted onto the housing of the vehicle 10, or that the defect is located in the electric motor 16.

The method 100 described above is particularly advantageous, as it allows detecting wear and defect within the powertrain 14, including the electric motor 16, easily. Indeed, the method can be implemented on conventional electric vehicles, without requiring structural modification of such vehicles. Its implementation is therefore simple and inexpensive.

Furthermore, the method 100 allows for detecting a large variety of defects, as any defect increasing or decreasing friction within the powertrain 14 is influencing the motor torque provided by the electric motor 16 required to stabilize the rotation of the electric motor to a preset speed.

In addition, the method 100 is without constraint to a driver of the vehicle 10, as it does not alter driving of the vehicle and does not require any driver intervention.

The vehicle 10 described above is of standard conception. Thus, various modifications can be envisaged without affecting the execution of method 100.

For example, the gearbox can have a number of speed different from four, for example two or eight; and/or a number of dug clutches different from two, for example one or three.

According to other examples, the powertrain 14 does not comprise a differential.

According to other examples, the drivetrain 18 does not comprise a gearbox, but another type of transmission, such as a fixed transmission or a continuously variable transmission.

Therefore, it should be understood that the method 100 described above can be applied to other electric vehicles with a different architecture, having at least a drivetrain allowing the electric motor to be decoupled from the drive wheels.

According to other examples, the powertrain 14 comprises multiple electric motors, for example two or three electric motors. For example, the drivetrain 18 comprises two inputs, each electric motor being one input of the drivetrain, and one output, connected to the differential 20.

In such examples, the initial cycles 110A and 110B of the initial phase 110 of the method 100 are performed multiple times, preferably once for each electric motor, and the initial cycles 120A and 120B of the analysis phase 120 are performed multiple times, preferably once for each electric motor. Therefore, the method 100 allows for detecting and locating wear and defect within the powertrain 14. In particular, a wear or defect can located within the drivetrain 18 depending on which components of the drivetrain are connected to the electric motor running during the initial cycles in which the wear or defect is detected.

In the example described above, the motor torque delivered by the electric motor 16 to the drivetrain 18 is delivered by the drivetrain to the drive wheels 12 of the vehicle, said drive wheels being mechanical components of the vehicle. According to other examples, the motor torque is delivered by the drivetrain 18 to other mechanical components of the vehicle 10, such as, for example, a compressor, a pump, and/or any other mechanical component requiring an input torque to be driven. In other words, the powertrain 14 is configured to drives mechanical components in rotation. In such examples, the method 100 is performed as described above, with the drivetrain in an uncoupled configuration so that the mechanical components are not driven by the electric motor 16 during the performing of the method. Alternatively, the drivetrain 18 can deliver the motor torque of electric motor 16 simultaneously to the drive wheels 12 and to other mechanical components of the vehicle 10.

Furthermore, the method 100 is described above as an example, from which different modification can be envisaged.

For example, the initial cycles 110A and 110B of the initial phase 110, and the analysis cycles 120A and 120B of the analysis phase 120, do not comprise the second running steps 114, 124, the second stabilization steps 115, 125, and the second measuring steps 116, 126. In other words, the initial cycles and the analysis cycles are performed with the electric motor rotating in only one direction.

According to other examples, the method 100 does not comprises the initial phase 110. In such an example, the analysis phase 120 is repeated and the states of health established during the analyzing steps 127 of the analysis cycles 120A and 120B of the last performed analysis phase 120 are compared with states of health established during analysis steps 127 of the analysis cycles 120A and 120B of previously performed analysis phases 120, to detect an evolution of the states of health over time.

According to other examples, the states of health obtained during an analysis phase 120 are compared to reference values obtained by other means, such as through calculation or with reference vehicles, instead or in addition of being compared to the states of health obtained during the initial phase 110 and during the previously executed analysis phases 120.

According to other examples, the initial phase 110 and the analysis phases 120 are only performed with one uncoupled configuration of the drivetrain 18, preferably with the third uncoupled configuration of the drivetrain. In other words, the initial phase 110 does not comprises the second initial cycle 110B, and the initial phases 120 do not comprises the second analysis cycle 120B. Hence, in such an example, the method 100 is easier to perform, but the location of a defect within the powertrain 14 cannot be detected.

In the examples described above, the method 100 is performed while the vehicle 10 is stationary and while the drivetrain 18 is in an uncoupled configuration. This is advantageous as it allows measuring the first and second motor torque precisely: as the vehicle is stationary, external influences on the powertrain 14 are minimal. However, due to the drivetrain being in an uncoupled configuration, monitoring the state of health of parts of the vehicle located downstream from the drivetrain, as the differential 20 and the drive wheels 12, is not possible.

Hence, in other examples, the method 100 is performed while the vehicle 10 is running and while the drivetrain 18 is in the coupled configuration. In other words, the method is performed while the electric motor 16 is used to drive the drive wheels 12 of the vehicle. More precisely, the initial phase 110 and the analysis phase 120 are performed while the vehicle is running in a stable motion. For example, the initial cycle 110A and the analysis cycle 120A are performed while the vehicle 10 is running on a highway, at a constant speed and on flat ground, and the second initial cycle 110B and the second analysis cycle 120B are performed while the vehicle 10 reversing at a constant speed on flat ground, or are not performed. Performing the method 100 while the vehicle is running is particularly advantageous to monitor the state of health of more components of the vehicle, that is, of all the components driven by the electric motor 16. With the vehicle 10 described above, the state of health of the differential 20 and of the drive wheels 12 can also be monitored. Therefore, more defect and wear of the vehicle 10 can be detected. Another advantage is that detecting a defect or wear is easier when the vehicle is running, as a load applied on the powertrain 14 tends to amplify the effect of a defect or wear.

Additionally, in these other examples, when the mechanical components driven by the drive train 18 are not drive wheels but other mechanical components, for example to a compressor, it is to be understood that whether the vehicle is moving or not is irrelevant: only the fact that the mechanical components are running or not influences the method 100.

Furthermore, in these other examples, as the drivetrain is driving the mechanical components, the method 100 can be used on a vehicle having a drivetrain with no uncoupled configuration, such as a vehicle with no gearbox.

Example 1: a method 100 for monitoring the state of health of a powertrain 14 of an electric vehicle 10, the powertrain 14 comprising at least one electric motor 16 and a drivetrain 18, the drivetrain being configured to deliver a motor torque produced by the electric motor to mechanical components 12 of the electric vehicle to drive the mechanical components,
wherein the method 100 comprises an analysis cycle 120A; 120B that includes, in this order:
- running 121 the electric motor 16 in a first direction of rotation until a first preset speed of the electric motor is reached;
- maintaining 122 the first preset speed until stabilization of the powertrain 14;
- measuring 123 a first motor torque delivered by the electric motor 16 to the drivetrain 18; and
- establishing 127 a state of health of the powertrain 14 by analyzing said first motor torque,
and wherein the method further comprises:
- comparing 130 the state of health established 127 during the analysis cycle 120A; 120B of the powertrain to a reference value to detect wear of the powertrain.

Example 2: the method 100 of example 1, wherein the analysis cycle 120A; 120B further includes, in this order:
- running 124 the electric motor 16 in a second direction of rotation until a second preset speed of the electric motor is reached;
- maintaining 125 the second preset speed until stabilization of the powertrain 14; and
- measuring 126 a second motor torque delivered by the electric motor 16 to the drivetrain 18,
and wherein establishing 127 the state of health of the powertrain 14 is performed by analyzing said first motor torque and said second motor torque.

Example 3: the method 100 of example 2, wherein establishing 127 the state of health of the powertrain 14 is performed by analyzing an average of the first motor torque and the second motor torque.

Example 4: the method 100 of any one of examples 1 to 3, wherein the method 100 further comprises an initial cycle 110A; 110B, performed before the analysis cycle 120A; 120B, wherein the initial cycle 110A; 110B includes, in this order:
- running 111 the electric motor 16 in the first direction of rotation until the first preset speed of the electric motor is reached;
- maintaining 112 the first preset speed until stabilization of the powertrain 14;
- measuring 113 a first initial motor torque delivered by the electric motor 16 to the drivetrain 18; and
- establishing 117 an initial state of health of the powertrain 14 by analyzing said first initial motor torque,
and wherein the reference value against which the state of heath of the powertrain 14 established 127 during the analysis cycle 120A; 120B is compared 130 is the initial state of health of the powertrain 14 established 117 during the initial cycle 110A; 110B.

Example 5: the method 100 of example 4, wherein the initial cycle 110A; 110B further includes, in this order:
- running 114 the electric motor 16 in the second direction of rotation until the second preset speed of the electric motor is reached;
- maintaining 115 the second preset speed until stabilization of the powertrain 14; and
- measuring 116 a second initial motor torque delivered by the electric motor 16 to the drivetrain 18,
and wherein establishing 117 the initial state of health of the powertrain 14 during the initial cycle 110A; 110B is performed by analyzing said first initial motor torque and said second initial motor torque.

Example 6: the method 100 of any one of examples 1 to 5, wherein the method 100 further comprises repeating the analysis cycle 120A; 120B over time to monitor an evolution over time of the states of health of the powertrain 14 established 127 during the repeated analysis cycles 120A; 120B.

Example 7: the method 100 of any one of examples 1 to 6, wherein the drivetrain 18 is operable between a coupled configuration, in which the drivetrain delivers a motor torque produced by the electric motor 16 to the mechanical components 12 of the electric vehicle 10, and an uncoupled configuration, in which the electric motor 16 is disconnected from the mechanical components 12, and wherein the method 100 is performed when the drivetrain 18 is in the uncoupled configuration.

Example 8: the method 100 of example 7, wherein the analysis cycle 120A; 120B is performed:
- after a driver of the electric vehicle 10 requests the electric vehicle to start, and before the vehicle actually starts, and/or
- after a driver of the electric vehicle 10 requests the electric vehicle to stop, and before the vehicle actually stops.

Example 9: the method 100 of example 7, wherein the electric vehicle 10 is a rechargeable battery electric vehicle, the electric motor 16 being powered by a battery, and wherein the analysis cycle 120A; 120B is performed during a recharge of the battery.

Example 10: the method 100 of any one of examples 7 to 9, wherein the drivetrain 18 comprises a gearbox including gears 24, 28, 30, 32 and at least two dog clutches 48, 50 that can be engaged or disengaged with the gears 24, 28, 30, 32, the uncoupled configuration of the drivetrain 16 being achieved when at least one dog clutch of the gearbox is not engaged.

Example 11: the method 100 of example 10, wherein the method 100 comprises an analysis phase 120, during which the analysis cycle 120A; 120B is repeated for several distinct uncoupled configurations of the drivetrain 18, each uncoupled configuration of the drivetrain having a different configuration of engaged and disengaged dog clutches 48, 50.

Example 12: the method 100 of example 11, wherein the method 100 further comprises analyzing 130 the states of health of the powertrain 14 established during the analysis cycles 120A; 120B of the analysis phase 120 to locate a defect of the powertrain.

Example 13: the method 100 of any one of examples 1 to 6, wherein the method is performed when the mechanical components 12 of the electric vehicle 10 are running.

Example 14: the method 100 of any one of examples 1 to 14, wherein the mechanical components 12 of the electric vehicle 10 include drive wheels 12 of the electric vehicle.

Example 15: a vehicle 10 comprising:
- mechanical components 12,
- a powertrain 14 including at least one electric motor 16 and a drivetrain 18, the drivetrain being configured to deliver a motor torque produced by the electric motor to the mechanical components to drive the mechanical components,
- a sensor 17, configured to measure a motor torque delivered by the electric motor 16 to the drivetrain 18, and
- a control unit 60,
wherein the control unit 60 is configured to perform the method 100 according to any one of examples 1 to 14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method (100) for monitoring the state of health of a powertrain (14) of an electric vehicle (10), the powertrain (14) comprising at least one electric motor (16) and a drivetrain (18), the drivetrain being configured to deliver a motor torque produced by the electric motor (16) to mechanical components (12) of the electric vehicle (10) to drive the mechanical components,
wherein the method (100) comprises an analysis cycle (120A; 120B) that includes, in this order:
- running (121) the electric motor (16) in a first direction of rotation until a first preset speed of the electric motor is reached;
- maintaining (122) the first preset speed until stabilization of the powertrain (14);
- measuring (123) a first motor torque delivered by the electric motor (16) to the drivetrain (18); and
- establishing (127) a state of health of the powertrain (14) by analyzing said first motor torque,
and wherein the method (100) further comprises:
- comparing (130) the state of health established (127) during the analysis cycle (120A; 120B) of the powertrain to a reference value to detect wear of the powertrain (14).

2. The method (100) of claim 1, wherein the analysis cycle (120A; 120B) further includes, in this order:
- running (124) the electric motor (16) in a second direction of rotation until a second preset speed of the electric motor is reached;
- maintaining (125) the second preset speed until stabilization of the powertrain (14); and
- measuring (126) a second motor torque delivered by the electric motor (16) to the drivetrain (18),
and wherein establishing (127) the state of health of the powertrain (14) is performed by analyzing said first motor torque and said second motor torque.

3. The method (100) of claim 2, wherein establishing (127) the state of health of the powertrain (14) is performed by analyzing an average of the first motor torque and the second motor torque.

4. The method (100) of any one of claims 1 to 3, wherein the method (100) further comprises an initial cycle (110A; 110B), performed before the analysis cycle (120A; 120B), wherein the initial cycle (110A; 110B) includes, in this order:
- running (111) the electric motor (16) in the first direction of rotation until the first preset speed of the electric motor is reached;
- maintaining (112) the first preset speed until stabilization of the powertrain (14);
- measuring (113) a first initial motor torque delivered by the electric motor (16) to the drivetrain (18); and
- establishing (117) an initial state of health of the powertrain (14) by analyzing said first initial motor torque,
and wherein the reference value against which the state of heath of the powertrain (14) established (127) during the analysis cycle (120A; 120B) is compared (130) is the initial state of health of the powertrain (14) established (117) during the initial cycle (110A; 110B).

5. The method (100) of claim 4, wherein the initial cycle (110A; 110B) further includes, in this order:
- running (114) the electric motor (16) in the second direction of rotation until the second preset speed of the electric motor is reached;
- maintaining (115) the second preset speed until stabilization of the powertrain (14); and
- measuring (116) a second initial motor torque delivered by the electric motor (16) to the drivetrain (18),
and wherein establishing (117) the initial state of health of the powertrain (14) during the initial cycle (110A; 110B) is performed by analyzing said first initial motor torque and said second initial motor torque.

6. The method (100) of any one of claims 1 to 5, wherein the method (100) further comprises:
- repeating the analysis cycle (120A; 120B) over time to monitor an evolution over time of the states of health of the powertrain (14) established (127) during the repeated analysis cycles (120A; 120B).

7. The method (100) of any one of claims 1 to 6, wherein the drivetrain (18) is operable between a coupled configuration, in which the drivetrain (18) delivers a motor torque produced by the electric motor (16) to the mechanical components (12) of the electric vehicle (10), and an uncoupled configuration, in which the electric motor (16) is disconnected from the mechanical components (12), and wherein the method (100) is performed when the drivetrain (18) is in the uncoupled configuration.

8. The method (100) of claim 7, wherein the analysis cycle (120A; 120B) is performed:
- after a driver of the electric vehicle (10) requests the electric vehicle to start, and before the vehicle actually starts, and/or
- after a driver of the electric vehicle (10) requests the electric vehicle to stop, and before the vehicle actually stops.

9. The method (100) of claim 7, wherein the electric vehicle (10) is a rechargeable battery electric vehicle, the electric motor (16) being powered by a battery, and wherein the analysis cycle (120A; 120B) is performed during a recharge of the battery.

10. The method (100) of any one of claims 7 to 9, wherein the drivetrain (18) comprises a gearbox including gears (24, 28, 30, 32) and at least two dog clutches (48, 50) that can be engaged or disengaged with the gears (24, 28, 30, 32), the uncoupled configuration of the drivetrain (16) being achieved when at least one dog clutch of the gearbox is not engaged.

11. The method (100) of claim 10, wherein the method (100) comprises an analysis phase (120), during which the analysis cycle (120A; 120B) is repeated for several distinct uncoupled configurations of the drivetrain (18), each uncoupled configuration of the drivetrain having a different configuration of engaged and disengaged dog clutches (48, 50).

12. The method (100) of claim 11, wherein the method (100) further comprises analyzing (130) the states of health of the powertrain (14) established during the analysis cycles (120A; 120B) of the analysis phase (120) to locate a defect of the powertrain.

13. The method (100) of any one of claims 1 to 6, wherein the method (100) is performed when the mechanical components (12) of the electric vehicle (10) are running.

14. The method (100) of any one of claims 1 to 13, wherein the mechanical components (12) of the electric vehicle (10) include drive wheels (12) of the electric vehicle.

15. A vehicle (10) comprising:
- mechanical components (12),
- a powertrain (14) including at least one electric motor (16) and a drivetrain (18), the drivetrain being configured to deliver a motor torque produced by the electric motor to the mechanical components to drive the mechanical components,
- a sensor (17), configured to measure a motor torque delivered by the electric motor (16) to the drivetrain (18), and
- a control unit (60),
wherein the control unit (60) is configured to perform the method (100) according to any one of claims 1 to 14.
